Europäisches Patentamt

European Patent Office

Office européen des brevets

(11) Veröffentlichungsnummer: **0 226 962**
A2

## (12) EUROPÄISCHE PATENTANMELDUNG

(21) Anmeldenummer: **86117252.6**

(22) Anmeldetag: **11.12.86**

(51) Int. Cl.⁴: **A 61 C 13/28**

(30) Priorität: **11.12.85 DE 8534759 U**
**13.10.86 DE 8627095 U**

(43) Veröffentlichungstag der Anmeldung:
**01.07.87 Patentblatt 87/27**

(84) Benannte Vertragsstaaten:
**AT BE CH DE ES FR GB GR IT LI LU NL SE**

(71) Anmelder: **Grün, Helmut**
**Wichernstrasse 19**
**D-5900 Siegen 1(DE)**

(72) Erfinder: **Grün, Helmut**
**Wichernstrasse 19**
**D-5900 Siegen 1(DE)**

(74) Vertreter: **Blumbach Weser Bergen Kramer Zwirner**
**Hoffmann Patentanwälte**
**Sonnenbergerstrasse 43**
**D-6200 Wiesbaden 1(DE)**

(54) **Federgebiss.**

(57) Federgebiß mit Bügelfedern (1, 2, 3, 61) , die jeweils Ringösen (6) an ihren Enden aufweisen und mit diesen in Zapfenlagern (9) gehalten sind. Bei der Bewegung der Prothesenteile (24, 25) bleiben die Bügelfedern (1, 2, 3, 61) in ihrer Ebene, d. h. seitliches Ausweichen in Richtung der Mundschleimhäute wird vermieden.

Fig.1

EP 0 226 962 A2

## Federgebiß

Die Erfindung bezieht sich auf ein Federgebiß, bei dem eine Oberkiefer- und Unterkiefer-Prothese jeweils seitlich durch je eine Bügel- oder Schenkelfeder scharnierartig miteinander verbunden sind.

Vollprothesen leiden an mangelndem Halt, wodurch erhebliche Schwierigkeiten beim Kauen und Sprechen entstehen. Es hat nicht an Versuchen gefehlt, durch Federkonstruktionen Abhilfe zu schaffen (DE-A-1 062 884). Dabei wird eine Bügelfeder verwendet, deren Schenkelenden aus der Bügelebene gebogen sind, um Lagerzapfen zu bilden, die in Bohrungen der Prothesen eingreifen. Eine derartige Feder bewegt sich jedoch auch aus der Bügelebene hinaus und kommt mit der Schleimhaut des Mundes in (schmerzhafte) Berührung. Nachteilig ist auch, daß die größte Federkraft auf Ober- und Unterkiefer einwirkt, wenn die Zähne aufeinander liegen, d. h. beim Kauen und bei geschlossenem Mund; während bei weit geöffnetem Mund überhaupt keine Federwirkung mehr vorhanden ist.

Der Erfindung liegt die Aufgabe zugrunde, ein Federgebiß zu schaffen, das einen sicheren Halt gewährt, ohne zu Verletzungen der Mundschleimhaut zu führen.

Die gestellte Aufgabe wird wie in den Ansprüchen angegeben gelöst.

Gemäß der Erfindung werden die beschriebenen Nachteile durch Federn aus Vollmaterial beseitigt, die als sogenannte Schenkelfedern in der Mitte vorgebogen sind und an den beiden Enden angebogene Lagerösen besitzen, welche beweglich auf zwei Lagerbolzen sitzen, die in Gewindehülsen im Prothesenmaterial eingeschraubt werden, so daß es unmöglich ist, daß die Federn seitlich herausgedrückt werden. Außerdem kann jeder Prothesenträger selbst die Federn auswechseln. Die im Prothesenmaterial eingesetzten Gewindehülsen und die Lagerbolzen haben oben Rechts- und unten Linksgewinde bzw. umgekehrt, damit das selbsttätige Lösen der Lagerbolzen ausgeschaltet ist. Der Lagerbolzen hat nach außen eine Abschlußscheibe mit relativ großem Durchmesser, damit die Feder stets dicht am Prothesenmaterial gelagert ist. Darüber hinaus sollen die Schenkelfedern durch überstehendes Prothesenmaterial gegenüber den Wangenschleimhäuten abgeschirmt werden.

Schließlich wird gemäß der Erfindung der Schließdruck reduziert durch eine lose aufgeschobene Schiebehülse, die durch Zwangsführungen in Führungsschlitzen im Prothesenmaterial so hin- und hergeschoben wird, daß sich beim Schließen des Mundes eine in der Feder eingearbeitete Schwachstelle aus der Schiebehülse herausdrückt und den Federdruck weitgehend aufhebt, während beim Öffnen des Mundes diese Schwachstelle wieder in die Schiebehülse hineingezogen und damit überbrückt wird, so daß die volle Federkraft wieder hergestellt ist.

Eine weitere Möglichkeit, den Schließdruck zu reduzieren, besteht darin, daß in den beiden geraden Schenkelenden der Vollmaterialfeder kurze Schraubenfedern eingesetzt werden, die sich leicht abbiegen lassen, während bei geöffnetem Mund ein ausreichender Federdruck erhalten bleibt.

Gemäß weiterer Erfindung wird eine Kombination zwischen Vollmaterial- und Spiralfedern angewendet. Beiderseits bleiben gerade Federenden mit den angebogenen Lagerösen bestehen, während das große Mittelteil der Feder spiralförmig so gewickelt wird, daß die Spiralfeder an beiden Seiten vollständig offen bleibt, so daß die Reinigung der Spiralfeder im Inneren völlig unproblematisch bleibt und bei der für Vollprothesen üblichen Reinigung automatisch erfolgt. Die Reinigung und gleichzeitig auch die Haltbarkeit der kombinierten Feder kann noch dadurch verbessert werden, daß die einzelnen Windungen vom Spiralfeder-Mittelteil der Kombinationsfeder nicht eng gewickelt wird (wie bisher üblich), sondern mit einem geringen Abstand, beispielsweise in der Stärke des verwendeten Federdrahtes. Dadurch wird der Reinigungseffekt beim Spülen verbessert, und die einzelnen Federwicklungen können bei den sehr häufigen Biegebewegungen ausweichen, so daß sowohl die Biegebewegung erleichtert, als auch die Haltbarkeit der Federn erhöht wird.

Schließlich sorgen Abdeck- und Führungsplatten dafür, daß die beiderseitigen Federenden aus Vollmaterial mit den angebogenen Lagerösen stets am Prothesenmaterial anliegen, so daß Führungsschlitze nicht mehr notwendig sind. Beiderseits an der Außenseite der Ober- und Unterkiefer-Prothese ist lediglich im Bewegungsbereich der Feder eine Planfläche zu schaffen, die von einer wulstartigen Abdeckung am oberen Rand der Oberkiefer-Prothese bzw. am unteren Rand der Unterkiefer-Prothese die Abdeck- und Führungsplatten gegenüber den Wangenschleimhäuten schützen.

Ferner befindet sich gemäß der Erfindung unter der Abdeck- und Führungsplatte ein Anschlagbund für die beiden Federenden aus Vollmaterial bei geschlossenen Prothesen und ein Anschlagbolzen, der dafür sorgt, daß die Kombifedern bei weit geöffnetem Mund immer noch leicht nach hinten durchgebogen sind, damit sie sich beim Schließen der Prothesen nicht in die falsche Richtung durchbiegen können.

Schließlich werden gemäß Erfindung die Abdeck- und Führungsplatten durch ein einziges kleines Schräubchen festgehalten, während ein Arretierbolzen in einer entsprechenden Bohrung vom Prothesenmaterial bzw. in einer eingesetzten Edelstahlbuchse eine seitliche Verschiebung der Abdeck- und Führungsplatte unmöglich macht. Darüber hinaus ist die Eigenmontage durch Laien dadurch ermöglicht, daß die Abdeck- und Führungsplatte auf dem Federlagerbund an der im Prothesenmaterial eingesetzten Gewindehülse zentriert wird, wodurch eine Führung für das kleine Befestigungsschräubchen gegeben ist.

Die Erfindung wird anhand von in den Zeichnungen dargestellten Ausführungsbeispielen näher erläutert. Dabei zeigt:

Fig. 1    eine schaubildliche Darstellung eines künstlichen Gebisses mit einer Schenkelfeder aus Vollmaterial, von der Seite gesehen,

Fig. 2    einen Schnitt nach der Linie A-A mit Federschutzschlitzen in der oberen und in der unteren Prothese,

Fig. 3    eine Schenkelfeder mit Schiebehülse in Draufsicht,

Fig. 4    eine kombineirte Schenkelfeder mit Schraubenfedern in Draufsicht,

Fig. 5    die Befestigungseinrichtung mit Lagerbolzen und Gewindehülsen,

Fig. 6 und 7  eine kombinierte Spezialfeder in zwei Ansichten,

Fig. 8 bis 10   im Prothesenmaterial eingesetzte Gewindehülse mit Schraube sowie Abdeck- und Führungsplatte in drei Ansichten,

Fig. 11   eine Ober- und Unterkiefer-Prothese mit eingebauter Federtechnik in Seitenansicht bei geöffnetem Mund,

Fig. 12   die gleiche Seitenansicht bei geschlossenem Mund,

Fig. 13   einen Schnitt nach der Linie A-A mit eingebauter Federtechnik.

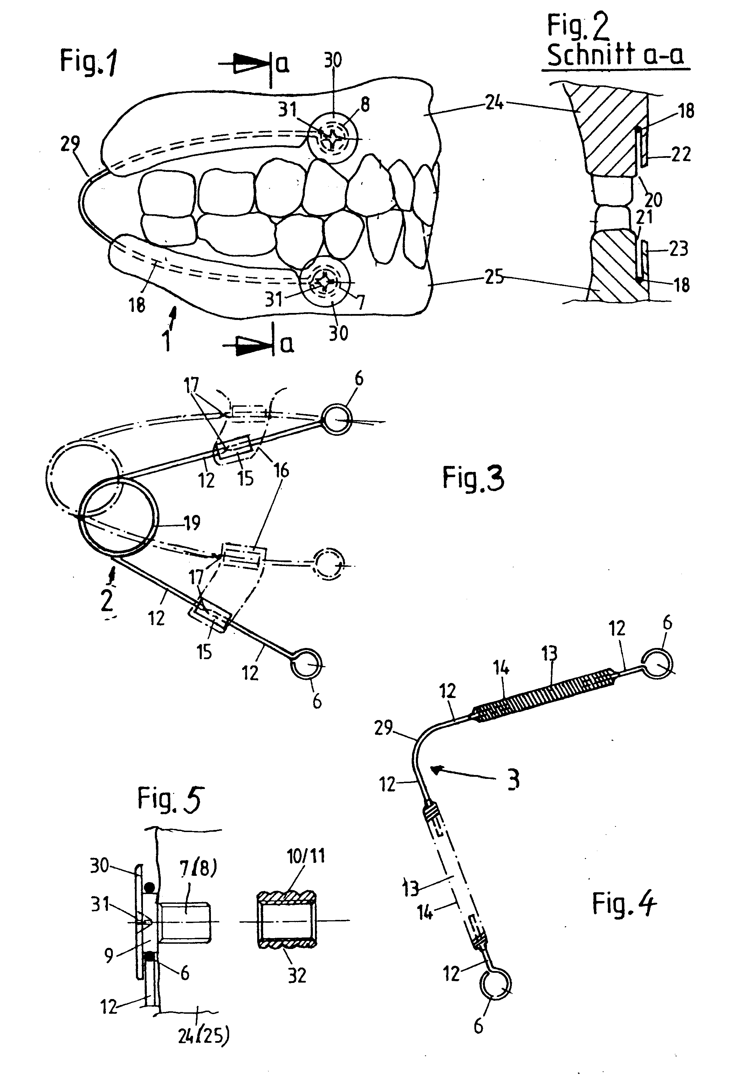

In Fig. 1 ist ein komplettes Federgebiß dargestellt, bestehend aus einer Oberkiefer-Prothese 24 und einer Unterkiefer-Prothese 25, die über eine Bügel- oder Schenkelfeder 1 miteinander verbunden sind. Die Schenkelfeder 1 ist einfach gebogen und besteht aus Vollmaterial. An den beiden Federenden ist je eine angebogene Ringöse 6 vorgesehen, die mit Lagerbolzen 7 und 8 an den Prothesen 24, 25 beweglich gelagert sind. Die Lagerbolzen 7, 8 besitzen einen Lagerbund 9 und eine Abschlußscheibe 30, welche die Ringöse 6 bedeckt, wobei nur ein geringer Zwischenraum zwischen den Schenkelfedern 1 und den Prothesen 24 und 25 vorhanden ist.

Zur sicheren Befestigung der Lagerbolzen 7 im Prothesenmaterial 24 und 25 sind Gewindehülsen 10 und 11 mit spiralförmigen Befestigungsrillen 32 vorgesehen. Die Lagerbolzen 7 und 8 werden mit Hilfe eines Kreuzschlüssels im Kreuzschlitz 31 ein- und ausgeschraubt. Es wird unterschiedliches Rechts- und Linksgewinde an den Lagerbolzen und Gewindehülsen benutzt, um das selbsttätige Lösen der Lagerbolzen 7 und 8 zu verhindern. Beim Schließen der beiden Prothesen 24 und 25 wird eine größere Kraft auf die Lagerbolzen 7 ausgeübt als beim Öffnen. Dabei werden Drehmomente über die Ringösen 6 auf die Lagerbolzen 7 übertragen. Das Gewinde der Lagerbolzen 7 wird deshalb so gewählt, daß die Lagerbolzen 7 sich festdrehen. Dies wird im Ausführungsbeispiel in Fig. 1 dadurch erreicht, daß in der rechten Oberkiefer-Prothesenhälfte 24 ein Lagerbolzen 7 und eine Gewindehülse 10 mit Rechtsgewinde eingesetzt sind, während in der Unterkiefer-Prothese 25 Linksgewinde erforderlich ist. Auf der linken, nicht dargestellten Gesichtshälfte ist die umgekehrte Anordnung notwendig, um den gleichen Effekt zu erzielen.

In Fig. 2 sind Führungsschlitze 20 und 21 dargestellt, die außerhalb der beiden Zahnreihen 27 und 28 in der Ober- und Unterkiefer-Prothese 24 und 25 eingearbeitet sind, um der Feder 1 bzw. deren aus Federdraht bestehende Schenkel 18 eine zusätzliche Führung zu geben. Abdeckbereiche 22 und 23 verhindern gleichzeitig das Einklemmen von Wangenschleimhäuten. Die erforderliche Länge und Anordnung der Führungs- und Schutzschlitze 20/21 ist bei den verschiedenen Patienten unterschiedlich und vom Zahnarzt anzupassen.

In Fig. 3 ist eine Bügelfeder 2 mit Federwindungen 19 in der Mitte und mit Biegestellen 17 an den Schenkeln 18 dargestellt. Bewegliche Schiebestücke 15 sind in Führungen 16 geführt, die im Prothesenmaterial 24 bzw. 25 als Unterbrechung der beiderseitigen Abdeckbereiche 22,23 der Führungs- und Schutzschlitze 20/21 ausgebildet sind. Die Schiebestücke 15 werden beim Schließen der Prothese nach vorn und beim Öffnen nach hinten verschoben. Dadurch wird beim Schließen der Prothesen die Biegestelle 17 freigegeben, so daß die Federkraft beim Schließen der Schenkelfeder kleiner wird. (Die Biegestelle 17 stellt eine weichere Feder dar.) Die umgekehrte Wirkungsweise ergibt sich beim Öffnen der Prothesen , indem die Schiebestücke 15 nach hinten verschoben und die Biegestellen 17 überbrückt werden. Dadurch wird die Federcharakteristik der härteren Feder wieder hergestellt. Bei geöffnetem Munde steht somit eine ausreichend große Kraft zur Verfügung, um die Oberkiefer-Prothese 24 gegen den Gaumen und die Unterkiefer-Prothese 25 gegen den beweglichen unteren Kieferknochen zu drücken.

In Fig. 4 ist eine Bügelfeder 3 kombiniert aus Vollmaterial und Schraubenfedermaterial dargestellt. In die geraden Federschenkelteile 12 oben und unten ist jeweils eine kurze Schraubenfeder 13 eingesetzt, die mit einer Kunststoffabdichtung 14 gegen das eventuelle Eindringen von Speiseresten geschützt wird. Da die Federvorbiegung 29 erhalten bleibt und beim Schließen der Prothesen sowohl das Federmittelstück aus Vollmaterial als auch die beiden Endstücke aus Vollmaterial mitgebogen werden, ergibt sich für die Schraubenfeder 13 nur eine geringe Abbiegung, bei der weniger Kraftaufwendung erforderlich ist als bei einer Vollmaterialfeder. Auf diese Weise wird ebenfalls der erhöhte Federdruck beim Schließen der Prothesen ganz oder teilweise weggenommen.

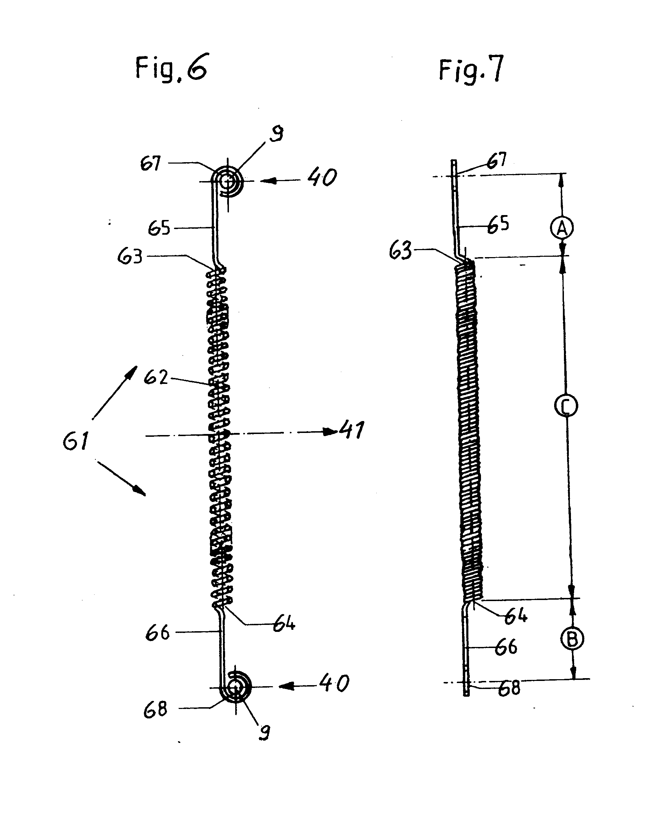

In Fig. 6 und 7 ist eine kombinierte Bügel-Schrauben-Feder 61 in zwei Ansichten dargestellt. Das schraubenförmig gewickelte Mittelstück 62 ist entweder eng gewickelt oder mit Abstand (zu Reinigungszwecken) gewickelt. An den offenen Enden 63, 64 geht der Federdraht in Schenkel 65 und 66 über, an deren Enden Ringösen 67, 68 angebogen sind.

Die beiden Ringösen 67/68 sind nicht mittig, sondern einseitig nach derselben Seite hin angebogen, damit beim Schließen der Prothesen vom Federlagerbund 9 ausgehender Druck stets in Richtung der Pfeile 70 auf die geschlossene Hälfte der Ringöse 67/68 gerichtet ist, während das Mittelteil 62 der Feder 61 in entgegengesetzter Richtung 71 gleichmäßig durchgebogen wird.

In der Seitenansicht nach Fig. 7 ist dargestellt, daß die beiden angebogenen Ringösen 67/68 zur Schraubenachse versetzt angeordnet sind, also einseitig plan aufliegend angebogen werden sollen, um das Anliegen der gebogenen Feder 62 mit den beiderseitigen Lagerenden 65/67 und 66/68 auf Planflächen der Ober- bzw. Unterkieferprothese zu gewährleisten.

Schließlich sei noch erwähnt, daß die Länge C des schraubenförmigen Mittelteils 62 der Feder 61 in der Regel länger ist als das Maß A + B der beiderseitigen Schenkel 65 und 66 aus Vollmaterial.

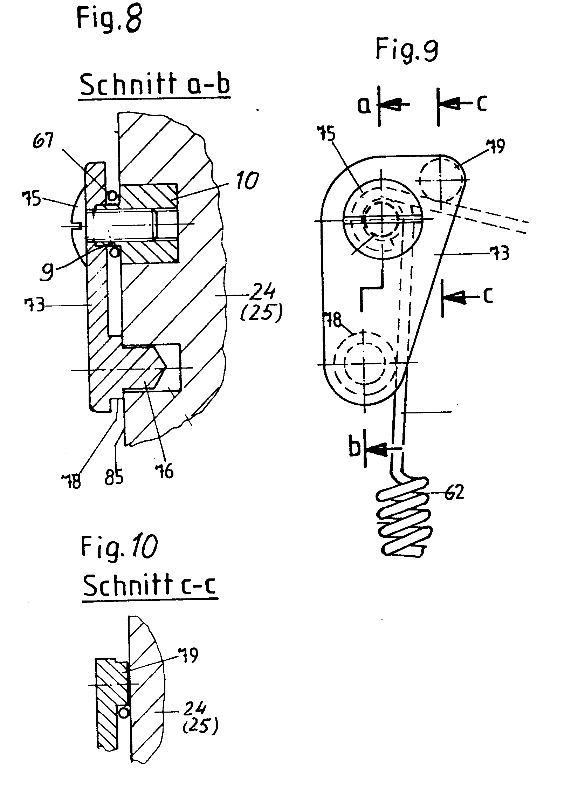

In Fig. 8 bis 10 ist die im Prothesenmaterial eingesetzte Gewindehülse 10 , die auf dem Lagerbund 9 der Gewindehülse 10 gelagerte Ringöse 67, ferner eine über den Lagerbund 9 greifende Abdeck- und Führungsplatte 73 mit Anschlagbund 78, Arretierbolzen 76 und Anschlagbolzen 79 dargestellt. Die Platte 73 greift über die Ringösen 67 und wird selbst mit einer Flachrundkopf-Schlitzschraube 75 an der Gewindehülse 10 befestigt. Die Lageröse 67 greift von unten her um den Lagerbund 9, während die Schenkel 65 und 66 bei geschlossener Prothese am Anschlagbund 78 anliegen.

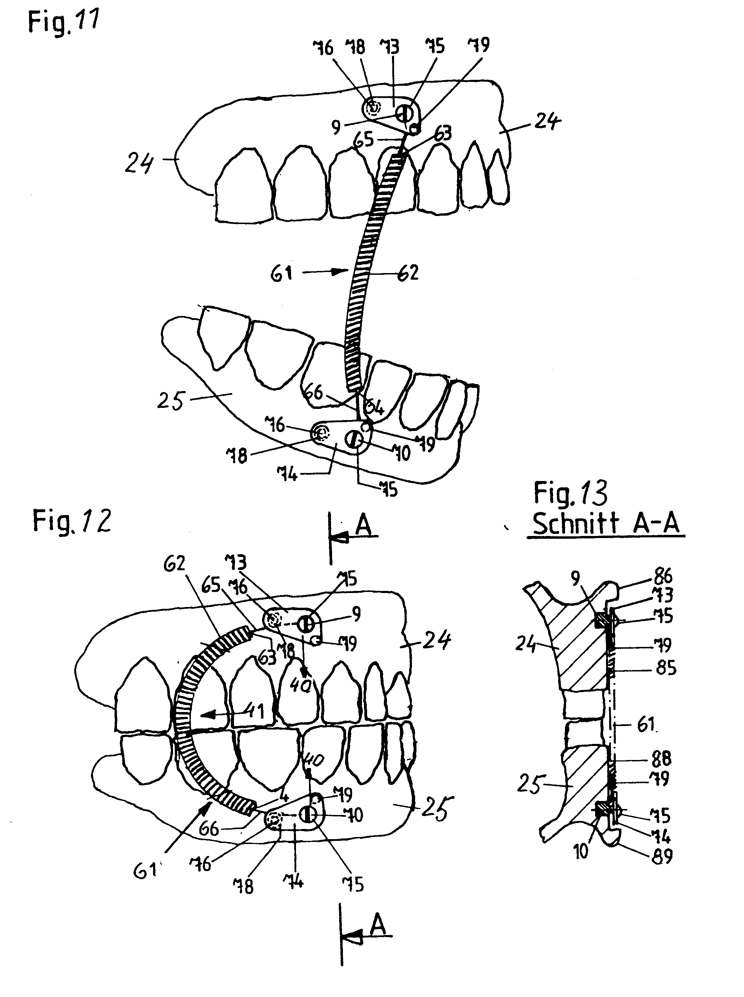

In Fig. 11 wird die Öffnungsstellung der Ober- und Unterkiefer-Prothese 24 und 25 mit eingebauter Feder 61 bei geöffneten Prothesen in Seitenansicht dargestellt. Dabei ist die Feder 61 nur noch leicht durchgebogen und liegt jeweils mit den Schenkeln am Anschlagbolzen 79 an. Die Abdeck- und Führungsplatten 73 für die Oberkiefer-Prothese 24 bzw. 74 für die Unterkiefer-Prothese 25 sind spiegelbildlich zueinander ausgebildet. Auf der gegenüberliegenden, nicht abgebildeten linken Seite der Vollprothese müssen die beiden spiegelbildlichen Abdeck- und Führungsplatten diagonal umgekehrt eingesetzt werden, d. h. die Abdeck- und Führungsplatte 73 wird in der Unterkiefer-Prothese 25 eingebaut, während die Abdeck- und Führungsplatte 74 in der Oberkiefer-Prothese 24 eingebaut werden muß.

Fig. 12 zeigt die rechte Seite der Kieferprothese 24, 25 in der geschlossenen Stellung. Die Feder 61 liegt mit ihrem Schenkel 65 bzw. 66 am Anschlagbund 78 an. Auf der gegenüberliegenden, linken (nicht dargestellten) Seite der Vollprothese sind die Abdeck- und Führungsplatten 74/74 und die Feder 61 vertauscht (gegenüber dem dargestellten Fall) einzubauen.

Fig. 13 zeigt einen Schnitt A-A durch die Ober- und Unterkiefer-Prothese 24, 25 im Bereich von Planflächen 85 und 88, welche eine Führung bei der Bewegung der Feder 61 darstellen. Die Abdeck- und Führungsplatte 73 wird von einem Wulstrand 86 bzw. die Abdeck- und Führungsplatte 74 von einem Wulstrand 89 abgeschirmt.

Bei der beschriebenen Federtechnik für Vollprothesen werden für die rechte und linke Ausführung nur eine einzige Spezialfeder 61, nur eine Ausführung der Gewindehülse 10, nur eine Ausführung der Schlitzschraube 75 und lediglich zwei verschiedene Ausführungen der Abdeck- und Führungsplatte 73/74 benötigt.

Patentansprüche

1.     Federgebiß mit folgenden Merkmalen: eine Oberkiefer- und Unterkiefer-Prothese (24, 25) sind jeweils seitlich durch je eine Bügel- oder Schenkelfeder (1, 2, 3, 61) scharnierartig miteinander verbunden; die Bügel- oder Schenkelfedern (1; 2; 3; 61) weisen Ringösen (6; 67, 68) an ihren freien Enden auf; an den Seiten der Oberkiefer-Prothese (24) und der Unterkiefer-Prothese (25) sind jeweils zapfenartige Lagereinrichtungen (7, 8, 9) zur schwenkbaren Lagerung der Ringösen (6; 67, 68) angebracht; die zapfenartigen Lagereinrichtungen (7, 8, 9) sind durch Abdeckmittel (30; 73) abgeschirmt.

2.     Federgebiß nach Anspruch 1, dadurch gekennzeichnet, daß die Bügel- oder Schenkelfedern (1, 2, 3) eine Federvorbiegestelle (19, 29) aus Edelstahl-Vollmaterial aufweisen.

3.     Federgebiß nach Anspruch 1 oder 2, dadurch gekennzeichnet, daß die Lagereinrichtungen als Lagerbolzen (7, 8) mit Linksgewinde bzw. Rechtsgewinde zum Einschrauben in Gewindehülsen (10, 11) in der Oberkiefer- und Unterkiefer-Prothese (24, 25) ausgebildet sind.

4.     Federgebiß nach einem der Ansprüche 1 bis 3, dadurch gekennzeichnet, daß die Prothese (24, 25) Schiebeführungen (16) für Schiebestücke (15) aufweist, daß Biegestellen (17) am Schenkel (18) der Bügelfeder (2) vorgesehen sind, die beim Schließen des Mundes von den Schiebestücken (15) freigegeben und beim Öffnen des Mundes von den Schiebestücken (15) wieder überbrückt werden.

5.     Federgebiß nach einem der Ansprüche 1 bis 3, dadurch gekennzeichnet, daß in die Schenkel der Bügel- oder Schenkelfeder (3) Schraubenfedern (13) einbezogen sind, die mit einer Kunststoffhülle (14) abgedichtet sind.

6. Federgebiß nach einem der Ansprüche 1 bis 5, dadurch gekennzeichnet, daß die Schenkel (18) der Bügel- oder Schenkelfeder (1, 2, 3, 61) teilweise in Führungsschlitzen (20, 21) angeordnet sind, die an den Außenseiten der Ober- und Unterkiefer-Prothesen (24, 25) vorgesehen sind, und daß Abdeckbereiche (22, 23) aus seitlich überstehendem Prothesenmaterial gebildet sind, um das Einklemmen der Wangenschleimhäute zu vermeiden.

7. Federgebiß nach Anspruch 1, dadurch gekennzeichnet, daß die Bügel- oder Schenkelfeder (61) ein schraubenförmig gewickeltes Mittelstück (62) aufweist.

8. Federgebiß nach einem der Ansprüche 1 bis 7, dadurch gekennzeichnet, daß die zapfenartigen Lagereinrichtungen Gewindehülsen (10) mit Lagerstellen (9) für die Ringösen (67, 68) sowie Abdeck- und Führungsplatten (73, 74) aufweisen, welche durch Schrauben (75) in den Gewindehülsen (10) befestigt und durch Arretierbolzen oder -schrauben (76) gegen seitliche Verschiebung gesichert sind.

9. Federgebiß nach Anspruch 7 oder 8, dadurch gekennzeichnet, daß zwei spiegelbildliche (chirale) Ausführungen (73 und 74) der Abdeck- und Führungsplatten (73, 74) vorgesehen sind, bei denen ein Anschlagbund (78) für die beiderseitigen geraden Schenkel (65, 66) bei geschlossener Prothese (Fig. 12) und ein Anschlagbolzen (79) bei geöffneter Prothese (Fig. 11) wirksam sind.

10. Federgebiß nach einem der Ansprüche 7 bis 9, dadurch gekennzeichnet, daß außen an der Oberkiefer-Prothese (24) beiderseits Planflächen (85) mit Wulsträndern (86) in den Bewegungsbereichen der Feder (61) sowie außen an der Unterkiefer-Prothese (25) beiderseits Planflächen (88) mit Wulsträndern (89) in der Bewegungsbereichen der Feder (61) vorgesehen sind.

Fig. 1

Fig. 2
Schnitt a-a

Fig. 3

Fig. 4

Fig. 5

0226962

Fig.6                    Fig.7

## Fig. 8

### Schnitt a-b

## Fig. 9

## Fig. 10

### Schnitt c-c

0226962

Fig.17

Fig.12

Fig.13
Schnitt A-A